# EUROPEAN PATENT APPLICATION

(11) **EP 3 476 651 A1**
(43) Date of publication of application: **01.05.2019**
(21) Application number: 18275153.7
(22) Date of filing: 02.10.2018
(51) Int. Cl.: B60N 2/75, B60R 11/02

(54) **A MOTOR VEHICLE SEAT HAVING AN ARMREST ASSEMBLY**

(30) Priority: 31.10.2017 GB 201717967
(71) Applicant: Ford Global Technologies, LLC, Dearborn, MI 48126 (US)
(72) Inventor: Jackson, Daniel, Basildon, Essex SS15 4EN (GB); Dell, Ken, Rainham, Essex RM13 9HT (GB)
(74) Representative: Hilton, Andrew Steven

(57) **Abstract**

A motor vehicle seat 1 is disclosed having an armrest assembly including an armrest 5; 105; 205 rotatably mounted on the seat 1 and a retractable utility support arm 10; 110; 210; supported by the armrest 5; 105; 205 and having a ball shaped mount 15; 115; 215 for use in mounting a small item of utility 50 in a passenger compartment of a motor vehicle. The ball shaped mount 15; 115; 215 is stowable when not in use in a recess 20; 120; 220 formed in a free end 5f; 105f; 205f of the armrest 5, 105, 205 so as not to cause an obstruction within the passenger compartment.

## Description

This invention relates to motor vehicle seating and in particular to a motor vehicle seat armrest assembly to provide a universal mount for a small item of utility.

There is an increasing need for flexible seating in modern motor vehicles and this will only increase further with the introduction of autonomous vehicles where there is no need for any of the occupants to face towards the front of the vehicle while it is in motion.

There is an ongoing need to provide one or more supports or mounts in a motor vehicle for what is referred to herein as 'small items of utility'. A small item of utility is an item of small size and weight that requires to be supported in the motor vehicle. Some examples of 'small items of utility' are mobile phones, computer tablets, cup holders, mobile satellite navigation devices and map holders.

It is known to provide mounts for such small items of utility that are attachable to a mounting surface in the motor vehicle such as a windscreen or dashboard via a sucker mount. However, it is a problem that such holders are only of use if the seating is mounted in the vehicle in a position where it is close to a suitable mounting surface for the holder.

There is therefore a need for a more adaptable type of holder that does not rely on proximity to a suitable mounting surface.

It is an object of this invention to provide a motor vehicle seat having an armrest assembly that overcomes the problems associated with the prior art.

According to a first aspect of the invention there is provided a motor vehicle seat having at least one motor vehicle seat armrest assembly, the motor vehicle seat armrest assembly comprising an armrest having first and second ends and being rotatable about the second end from a substantially horizontal in-use position to a substantially vertical stowed position, the first end of the armrest having a recess formed therein, the vehicle seat armrest assembly further comprising a retractable utility support arm supported by the armrest and having a ball shaped mount at a free end thereof to which in use a small item of utility can be attached when the utility support arm is in a deployed state in which it extends from the first end of the armrest characterised in that, when the utility support arm is in a retracted state, the retractable utility support arm is stowed within the armrest with the ball shaped mount of the utility support arm being stowed within the recess in the first end of the armrest.

The retractable utility support arm may be an extendable telescopic arm comprised of a number of engaged parts having one of the parts fastened to a structural part of the armrest and having the ball shaped mount mounted at a free end of another one of the parts.

The parts of the telescopic arm may be cylindrical tubes of differing diameter engaged with one another with the largest diameter tube fastened to the structural part of the armrest and having the ball shaped mount mounted at a free end of the smallest diameter tube.

Alternatively, the retractable utility support arm may be a flexible arm having one end slidingly engaged with a support in the armrest and having the ball shaped mount at an opposite end thereof.

The support in the armrest may be formed by a structural part of the armrest.

The flexible arm may be a flexible metal jointed shaft.

As yet a further alternative, the retractable utility support arm may be a rigid arm having one end slidingly engaged with a support in the armrest and having the ball shaped mount at an opposite end thereof.

The rigid arm may be a rigid curved arm.

The support in the armrest may be formed by a structural part of the armrest.

The seat may be rotatable about a substantially vertical axis.

The seat may be the seat is a captain's chair having a pair of armrest assemblies with one armrest assembly being rotatably mounted on each side of the captain's chair.

According to a second aspect of the invention there is provided a motor vehicle having a passenger compartment and at least one motor vehicle seat constructed in accordance with said first aspect of the invention mounted in the passenger compartment of the motor vehicle.

The invention will now be described by way of example with reference to the accompanying drawing of which:-
Fig.1a is a diagrammatic view of a motor vehicle seat in accordance with a first aspect of the invention having a first embodiment of an armrest assembly showing a telescopic arm in a deployed state;
Fig.1b is a scrap cross-section on an enlarged scale through a first end of an armrest forming part of the armrest assembly shown in Fig.1a showing a ball shaped mount stowed in a recess in the first end of the armrest;
Fig.2a is diagrammatic view of a first end of an armrest in accordance with a second embodiment showing a bendable flexible arm in a deployed state;
Fig.2b is a scrap cross-section through the armrest shown in Fig.2a showing a stowage passage in a structural part of the armrest for stowing the bendable flexible arm shown in Fig.2a;
Fig.3a is a scrap cross-section through an armrest forming part of a third embodiment of an armrest assembly showing a curved stowage passage in a structural part of the armrest for stowing a rigid curved arm shown in Fig.3b;
Fig.3b is a side view of a rigid curved arm forming part of an armrest assembly;
Fig.4a is a side view of a small item of utility in the form of a cup holder attached to the ball shaped mount at the end of the telescopic arm shown in Fig.1a showing a female mount sectioned along the line X-X on Fig.2b; and
Fig.4b is an end view of the female mount shown in Fig.4a.

It will be appreciated that the figures are diagrammatic in nature and are not intended to represent production ready components.

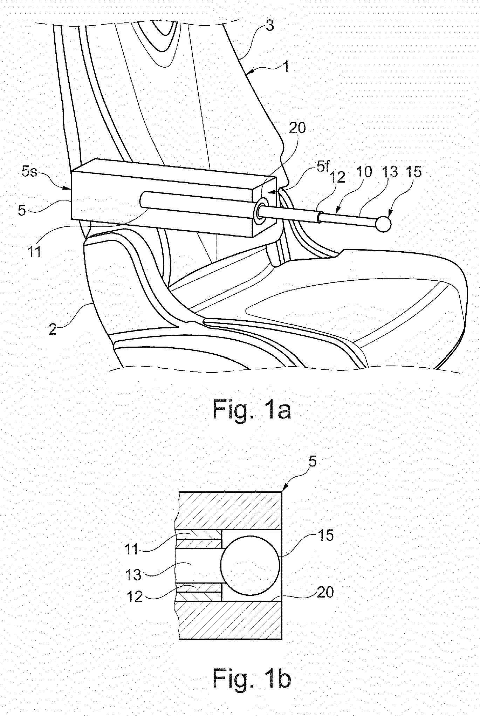

With particular reference to Figs.1a and 1b there is shown part of a motor vehicle seat 1 having a base 2 and a backrest 3. A first embodiment of an armrest assembly having an armrest 5 is shown pivotally attached to a right hand side of the backrest 3 of the motor vehicle seat 1.

The armrest 5 has a first end 5f and a second end 5s. The second end 5s of the armrest 5 is attached to the backrest 3 and the first end 5f is a free end that faces towards a front end of a motor vehicle (not shown) having a passenger compartment in which the vehicle seat 1 is mounted when the vehicle seat 1 is mounted in a forward facing position.

The armrest 5 is, in the case of this example, rotatable from a substantially horizontal in use position as shown in Fig.1a to a substantially vertical stowed position (not shown).

It will be appreciated that the vehicle seat 1 can be mounted in the passenger compartment so as to be rotatable about a substantially vertical axis or can be mounted to permit only forward and rearward movement of the vehicle seat 1.

In a case where the vehicle seat 1 is rotatably mounted it can be in the form of a captain's chair having a pair of armrest assemblies one each side. In such a case there would be one armrest 5 attached to a right hand side of the backrest 3 and one armrest 5 attached to a left hand side of the backrest 3.

The armrest assembly comprises the armrest 5 having a recess 20 formed in the first end 5f and a retractable utility support arm 10 supported by the armrest 5 so as to project from the first end 5f of the armrest 5 when in an deployed state.

The utility support arm 10 has a ball shaped mount 15 at a free end thereof to which in use a small item of utility can be attached. When the utility support arm 10 is in a retracted, stowed state the ball shaped mount 15 of the utility support arm 10 is stowed within the recess 20 in the first end 5f of the armrest 5.

The storage of the ball shaped mount 15 in the storage recess 20 when the utility support arm 10 is not in use prevents damage from occurring to the utility support arm 10 and also prevents the utility support arm 10 from being an obstruction within the passenger compartment of the motor vehicle.

In the case of this first embodiment the utility support arm is in the form of a telescopic arm 10 comprising first second and third cylindrical tubes 11, 12, and 13 of differing diameter engaged with one another having one end, namely the largest diameter first cylindrical tube 11, secured to a structural part of the armrest 5 and having the ball shaped mount 15 mounted at an opposite end thereof on a free end of the smallest diameter third cylindrical tube 13. The first cylindrical tube 11 is fastened to the armrest 5 and forms a storage passage/ guide for the other two tubes 12, 13.

To deploy the utility support arm 10 the ball shaped mount 15 is grasped by a user and pulled out of the recess 20 in the armrest 5 causing the telescopic arm 10 to extend as the tubes 11, 12 and 13 disengage from one another. When deployed the utility support arm 10 extends away from the first end 5f of the armrest 5.

To stow the utility support arm 10 from the deployed state, the ball shaped mount 15 is grasped by a user and pushed towards the armrest 5 until it engages with the recess 20 in the armrest 5. This action causes the telescopic arm 10 to shorten in length as the first, second and third tubes 11, 12 and 13 slide into one another.

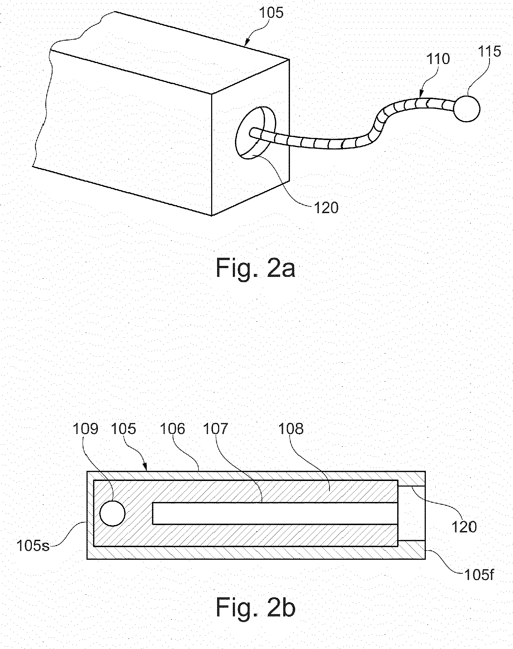

With reference to Figs.2a and 2b there is shown a preferred embodiment of the invention having an armrest 105 with first and second ends 105f and 105s that is intended to be a direct replacement for the armrest 5 shown in Fig.1a.

In the case of this second embodiment the retractable utility support arm is in the form of a flexible arm 110 having one end slidingly engaged with a passage 107 in a support forming part of the armrest 105. The support is formed by a structural part 108 of the armrest 108 sometimes referred to as an armature' located within a casing 106 in which is formed a recess 120 at the first end 105f of the armrest 105. The structural part 108 of the armrest 105 in the case of the example shown includes an aperture 109 used to pivotally connect the armrest 105 to a seat such as the seat 1 shown in Fig.1a.

The flexible arm 110 has a ball shaped mount 115 attached at an opposite end thereof to the end of the bendable arm 110 that is engaged with the passage 107.

In the case of this example, the flexible arm 110 is in the form of a flexible metal jointed shaft such as the Gooseneck Flexible tubing manufactured by Whitehouse Flexible Tubing Ltd of Britten Street, Redditch, Worcestershire, UK. It will be appreciated that such Gooseneck Tubing can be provided with a decorative finish such as a plastic coating if required and that the invention is not limited to the use of such tubing other types of flexible arms could be used.

To deploy the utility support arm 110 the ball shaped mount 115 is grasped by a user and pulled out of the recess 120 in the armrest 105 causing it to be pulled out from the passage 107. Although not shown, an end stop is provided on the utility support arm 110 to prevent it from being fully disengaged from the passage 107. Once in the deployed state the utility support arm 110 can be bent into a desired position by a user. When deployed the utility support arm 110 extends away from the first end 105f of the armrest 105.

To stow the utility support arm 110 from the deployed state, the ball shaped mount 115 is grasped by a user and pushed towards the armrest 105 until the ball shaped mount 115 engages with the recess 120 in the armrest 105.

It will be appreciated that if the utility support arm 110 has been manipulated into a sinuous curved shape in the deployed state then it will need to be partially straightened in order to allow it to re-engage with the passage 107. However, it will be appreciated that the action of pushing the utility support arm 110 into the passage 107 will cause straightening of the utility support arm 110 to occur.

This embodiment has the advantage that the flexible nature of the utility support arm 110 permits the ball shaped mount to be positioned in an optimal position for supporting a small item of utility.

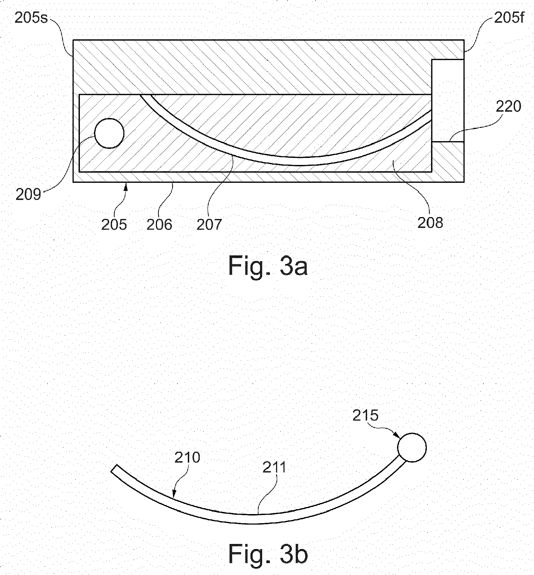

With reference to Figs.3a and 3b there is shown a third embodiment of the invention having an armrest 205 with first and second ends 205f and 205s that is intended to be a direct replacement for the armrest 5 shown in Fig.la.

In the case of this third embodiment the retractable utility support arm 210 is in the form of a rigid arm 211 having a ball shaped mount 215 attached to one end.

The rigid arm in the case of this example is in the form of a curved arm 211 but could be straight and has one end slidingly engaged with a passage 207 in a support forming part of the armrest 205. Although not shown, an end stop is provided on the utility support arm 210 to prevent it from being fully disengaged from the passage 207.

The support is formed by a structural part 208 of the armrest 205 located within a casing 206 in which is formed a recess 220 at the first end 205f of the armrest 205. The structural part 208 of the armrest 205 in the case of the example shown includes an aperture 209 used to pivotally connect the armrest 205 to a seat such as the seat 1 shown in Fig.1a.

The curved arm 211 has a ball shaped mount 115 attached at an opposite end thereof to the end of the curved arm 211 that is engaged with the passage 207 in the armrest 205.

The passage 207 is curved to match the shape of the curved arm 211 and although not shown could include bearings or guides to ease the process of engagement and disengagement of the curved arm 211 with the passage 207.

It will also be appreciated that other means could be used to support the curved arm 211 and that the invention is not limited to the use of a continuous passage, for example, a number of discrete supports could be used.

To deploy the utility support arm 210 the ball shaped mount 215 is grasped by a user and pulled out of the recess 220 in the armrest 205 causing the curved arm 211 to be pulled out of the passage 207 thereby extending the utility support arm 210 and positioning the ball shaped mount 215 away from the first end 205f of the armrest 205. When deployed the utility support arm 210 extends away from the first end 205f of the armrest 205.

In the case of this example, the ball shaped mount 215 will follow a simple arcuate path in an upward direction but it will be appreciated that if the passage 207 is formed in a component that is rotatably mounted in the structural part 208 of the armrest 205 then lateral and vertical displacement of the ball shaped mount 215 is achievable.

To stow the utility support arm 210 from the deployed state, the ball shaped mount 215 is grasped by a user and pushed towards the armrest 205 until it engages with the recess 220 in the armrest 205.

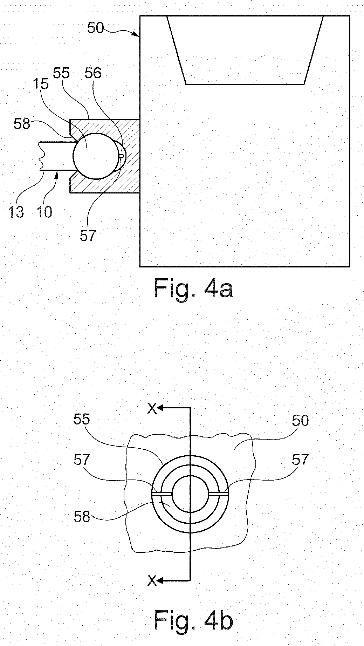

With particular reference to Figs.4a and 4b there is shown a small item of utility in the form of a cup holder 50 attached to a ball shaped mount which in this case is the ball shaped mount 15 at the end of the tube 13 forming part of the telescopic arm 10 shown in Fig.1a. It will however be appreciated that the cup holder 50 could alternatively be mounted on the ball shaped mount 115 shown in Fig.2a or on the ball shaped mount shown in Fig.3a.

The cup holder 50 includes a split female mount 55 having two parts divided by a pair of slots 57 and is made from a resilient plastic material that is shown in cross-section in Fig.4a. A tapered lead-in 58 is provided to assist with engagement of the ball shaped mount 15 with a part spherical cavity 56 formed in the female mount 55 used to accommodate the ball shaped mount 15.

The ball shaped mount 15 is an interference fit in the part spherical cavity 56 so that a clamping force is provided by the interaction of the ball shaped mount 15 with the part spherical cavity 56 in the female mount 55.

It will be appreciated that other forms of female mount can be used and that the invention is not limited to use with the female mount 55 shown in Figs. 4a and 4b.

Therefore in summary, a motor vehicle seat armrest is disclosed in which a deployable mount for supporting a small item of utility is included as part of the armrest. The mount is stowable in the armrest when not in use so as not to cause an obstruction with a passenger compartment of a motor vehicle. In all cases at least one part of the retractable utility support arm is slidingly mounted on the armrest so that the ball shaped mount can be said to be is slideable mounted for movement between its stowed and deployed positions.

One advantage of such an arrangement is that the deployable mount of this invention does not require the use of an additional surface to mount it and is positioned wherever the seat to which the armrest is connected is located within the passenger compartment of the motor vehicle.

The use of a ball shaped mount provides a universal mount for a number of differing items of utility (small objects) and allows orientation of any item so mounted into a preferred orientation.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A motor vehicle seat (1) having at least one motor vehicle seat armrest assembly, the motor vehicle seat armrest assembly comprising an armrest (5; 105; 205) having first and second ends (5f, 5s; 105f, 105s; 205f, 205s) and being rotatable about the second end (5s; 105s; 205s) from a substantially horizontal in-use position to a substantially vertical stowed position, the first end (5f; 105f; 205f) of the armrest (5; 105; 205) having a recess (20; 120; 220) formed therein, the vehicle seat armrest assembly further comprising a retractable utility support arm (10; 110; 210 supported by the armrest (5; 105; 205) and having a ball shaped mount (15; 115; 215) at a free end thereof to which in use a small item of utility (50) can be attached when the utility support arm (10; 110; 210) is in a deployed state in which it extends from the first end (5f; 105f; 205f) of the armrest (5; 105; 205) **characterised in that**, when the utility support arm (10; 110; 210) is in a retracted state, the retractable utility support arm (10; 110; 210) is stowed within the armrest (5; 105; 205) with the ball shaped mount (15; 115; 215) of the utility support arm (10; 110; 210) being stowed within the recess (20; 120; 220) in the first end (5f; 105f; 205f) of the armrest (5; 105; 205).

2. A motor vehicle seat as claimed in claim 1 wherein the retractable utility support arm is an extendable telescopic arm (10) comprised of a number of engaged parts (11, 12, 13) having one of the parts (11, 12, 13) fastened to a structural part of the armrest (5) and having the ball shaped mount (15) mounted at a free end of another one of the parts (11, 12, 13).

3. A motor vehicle seat as claimed in claim 2 wherein the parts of the telescopic arm are cylindrical tubes (11, 12, 13) of differing diameter engaged with one another with the largest diameter tube (11) fastened to the structural part of the armrest (5) and having the ball shaped mount (15) mounted at a free end of the smallest diameter tube (13).

4. A motor vehicle seat as claimed in claim 1 wherein the retractable utility support arm is a flexible arm (110) having one end slidingly engaged with a support in the armrest (105) and having the ball shaped mount (115) at an opposite end thereof.

5. A motor vehicle seat as claimed in claim 4 wherein the flexible arm is a flexible metal jointed shaft (110).

6. A motor vehicle seat as claimed in claim 1 wherein the retractable utility support arm is a rigid arm (210) having one end slidingly engaged with a support in the armrest (205) and having the ball shaped mount (215) at an opposite end thereof.

7. A motor vehicle seat as claimed in claim 6 wherein the rigid arm is a rigid curved arm (211).

8. A motor vehicle seat as claimed in any of claims 4 to 7 wherein the support in the armrest (5; 105; 205) is formed by a structural part (108; 208) of the armrest (5; 105; 205).

9. A motor vehicle seat as claimed in any of claims 1 to 8 wherein the seat (1) is rotatable about a substantially vertical axis.

10. A motor vehicle seat as claimed in claim 9 wherein the seat is a captain's chair (1) having a pair of armrest assemblies with one armrest assembly being rotatably mounted on each side of the captain's chair (1).

11. A motor vehicle having a passenger compartment and at least one motor vehicle seat as claimed in any of claims 1 to 10 mounted in the passenger compartment of the motor vehicle.
